# EUROPÄISCHE PATENTSCHRIFT

(11) **EP 2 875 546 B1**
(45) Veröffentlichungstag und Bekanntmachung des Hinweises auf die Patenterteilung: **17.01.2018**
(21) Anmeldenummer: 13742150.9
(22) Anmeldetag: 25.06.2013
(51) Int. Cl.: H01M 8/248, H01M 8/2475

(54) **SPANNMITTEL FÜR EINEN BRENNSTOFFZELLENSTAPEL SOWIE VERFAHREN ZUM VERSPANNEN EINES BRENNSTOFFZELLENSTAPELS**
CLAMPING MEANS FOR A FUEL CELL STACK AND METHOD FOR BRACING A FUEL CELL STACK
MOYEN DE SERRAGE D'UN EMPILEMENT DE PILES À COMBUSTIBLE ET PROCÉDÉ PERMETTANT DE SOLIDARISER PAR SERRAGE UN EMPILEMENT DE PILES À COMBUSTIBLE

(30) Priorität: 21.07.2012 DE 102012014459
(43) Veröffentlichungstag der Anmeldung: 27.05.2015
(73) Patentinhaber: Forschungszentrum Jülich GmbH, 52425 Jülich (DE)
(72) Erfinder: BOHNER, Jens, 53225 Bonn (DE); KVESIC, Mirko, 52428 Jülich (DE); SCHNEIDER, Nils, 52074 Aachen (DE); LEHNERT, Werner, 52351 Düren (DE)
(86) Internationale Anmeldenummer: PCT/DE2013/000332
(87) Internationale Veröffentlichungsnummer: WO 2014/015846

(56) Entgegenhaltungen:
- EP-A2- 1 841 000
- WO-A1-99/27602
- DE-A1-102006 060 810
- DE-A1-102007 061 650
- DE-A1-102008 029 183
- DE-A1-102008 040 869
- JP-A- 2006 294 366

## Beschreibung

Die Erfindung betrifft den Zusammenbau von Brennstoffzellen, insbesondere einer Vielzahl von Brennstoffzellen zu einem so genannten Brennstoffzellenstapel mit Hilfe eines Verspannungsmittels.

### Stand der Technik

Konventionelle Brennstoffzellenstapel, auch Stacks genannt, sind Stapel bei denen eine Vielzahl von Einzelzellen und weiteren Bauteilen geschichtet und miteinander verspannt werden. Zweck dieses Verpressens aller Bauteile besteht darin, dass die Komponenten alle gasdicht sind, so dass während des Betriebs keine ungewollte Vermischung des Brenngases und des Oxidationsgases auftritt und auch keins dieser Gase durch die einzelnen Komponenten der Anwendung entweichen kann.

Des Weiteren ist diese Verpressung nötig, um den elektrochemischen Kontakt der Membran-Elektroden-Einheit, kurz Membran-Elektrodeneinheit MEA genannt, in jeder Brennstoffzelle sicherzustellen, sodass jede Zelle ihre entsprechende Leistung entwickeln kann.

Bei diesem Verpressen muss nicht nur darauf geachtet werden, dass die erlaubten Anpressdrücke für die Dichtungen sowie für die MEA weder unter- noch überschritten werden. Es muss zudem auch darauf geachtet werden, dass bei einem solchen Pressvorgang die Setzvorgänge der komprimierten Bauteile ausgeglichen werden.

Zusätzlich sollte auch berücksichtigt werden, dass abhängig von der Betriebstemperatur der Brennstoffzelle, bzw. des Brennstoffzellenstapels, eine wärmebedingte Längenänderung auftreten kann, die jeweils abgefangen werden muss.

Für diese Zwecke werden Brennstoffzellenstapel zwischen so genannten Endplatten verpresst. Die entstehenden Längenänderungen werden dabei mit Hilfe von Federelementen ausgeglichen.

Bei den bisherigen Spannkonzepten für Brennstoffzellenstapel werden zurzeit folgende Aufgaben von mehreren Bauteilen übernommen und, wie nachfolgend anhand von Figuren dargestellt, derzeit gelöst:

### 1) Verspannen aller Komponenten gegeneinander.

Eine gängige Methode, um die einzelnen Bauteile miteinander zu verspannen, ist der Einsatz von Zugankern. Dazu werden in der Regel alle Bauteile über vier und mehr Zuganker mit Hilfe von Muttern mechanisch verspannt [1, 3, 6, 8, 9, 11]. Die Zuganker können außerhalb des Brennstoffzellenstapels angebracht oder auch in diesen integriert ausgeführt werden. Eine weitere Option ist der Einsatz von Keilen, die nach dem Prinzip der schiefen Ebene gegeneinander verschoben werden, und so die notwendige Kraft auf die Bauteile ausbilden [4]. Eine dritte Alternative ist der Einsatz von Druckplatten, welche mit Hilfe von Spannelementen eine in Stapelrichtung wirkende Zugkraft auf die Druckplatten ausüben [5].
Nachteilig werden bei dieser Art der Verspannung viele Bauteile benötigt. Das Verspannen mit Zugankern selbst gestaltet sich aufwendig, da jede Mutter an jedem Zuganker einzeln angezogen werden muss, weshalb es nur schwer gewährleistet werden kann, dass über allen Zuganker die gleiche Druckkraft aufgebracht wird. Bei den alternativen Methoden ist ein sehr komplexer Aufbau mit zusätzlichen Druckplatten nötig, welche ihrerseits die Federelemente zusammendrücken müssen, um die notwendige Kraft letztendlich auf die Dichtungen und Membran-Elektroden-Einheiten auszuüben.

### 2) Krafteinleitung auf die MEA zwecks elektrischer Kontaktierung.

Für die Sicherstellung der elektrischen Kontaktierung ist, wie bereits unter 1) aufgeführt, eine punktuelle Krafteinleitung über am Umfang angeordnete Zuganker vorgesehen [1, 6, 8, 9, 11]. Alternativ dazu kommen auch Spannbänder zum Einsatz, welche wiederum als umlaufende Wicklung um den Brennstoffzellenstapel angebracht werden, und in Kombination mit ballierten Flächen oder über eine weitere Platte mit Federelementen die Kraft mittig einbringen [2, 3]. Ferner sind Spannvorrichtungen für Brennstoffzellenstapel bekannt, bei denen Mittel zur Erzeugung einer in Stapelrichtung wirkenden Zugkraft auf Druckplatten inkl. Federelementen vorgesehen sind [5].

Nachteilig bei dieser Art der Verspannung ist, dass die aufgewendete Kraft jeweils nur punktuell eingeleitet wird. Es besteht die Gefahr, dass sich die Kraft dementsprechend ungleichmäßig auf die Fläche der Dichtung und die der Membran- Elektroden- Einheit auswirkt. Zusätzlich muss jeder Zuganker einzeln angezogen werden, was wiederum eine große Streuung innerhalb des Anzugsmomentes bewirkt. Dadurch ist es schwer, regelmäßig einen gleichmäßigen Anpressdruck auf die Dichtung und Membran- Elektroden- Einheit auszuüben und dauerhaft zu gewährleisten. Der Einsatz von Spannbändern benötigt normalerweise einen zusätzlichen ballierten Körper, damit die Kraft der Spannbänder wie gewünscht in den Stack geleitet werden kann.

### 3) Ausgleich des Setzverhaltens der einzelnen Bauteile während des Verspannens.

Es ist bekannt, dass sich Dichtungen, die im Kraft-Hauptschluss verspannt sind, setzen können. Unter dem Setzverhalten einer Dichtung versteht man den Dickenschwund nach der eingesetzten Kraftausübung. Je nach Anwendungsfall kann sich daher eine Abweichung von der Standarddicke der Dichtung positiv oder negativ auswirken bzw. muss eine Dickenkorrektur durchgeführt werden. Gemäß dem Stand der Technik verpresst eine externe Pressvorrichtung die Komponenten soweit, dass beim endgültigen Verspannen des Zellenstapels, wie unter 1) und 2) beschrieben, das Setzen der Bauteile weitestgehend schon berücksichtigt wurde. Mit Hilfe von Federelementen, beispielsweise Tellerfedern, Druckfedern, Blattfedern, etc., kann das Setzverhalten ausgeglichen werden. Diese werden üblicherweise bereits mit den Bauteilen für die mechanische Stack- Verspannung eingesetzt.

### 4) Ausgleich der Wärmeausdehnung der einzelnen Bauteile während des Betriebs.

Die vorgenannten Federelemente, meist Tellerfedern, Druckfedern, Blattfedern, etc., können neben dem Ausgleich des Setzverhaltens auch gleichzeitig den Ausgleich der unterschiedlichen Wärmeausdehnungen der einzelnen Bauteile sicherstellen.

Das Verpressen der Komponenten mithilfe einer externen Pressvorrichtung gestaltet sich aufwändig, da dabei der jeweilige Verfahrweg gemessen werden muss und es gewährleistet sein muss, dass der Stack im verpressten Zustand fixiert werden muss. Andernfalls könnte sich dieser nachteilig beim Entfernen der Pressvorrichtung wieder ausdehnen. Ferner sind beim Verspannen generell sehr steife Federn nötig die regelmäßig eine sehr hohe Federrate benötigen. Alternativ kann auch auf Federn mit einer geringeren Federrate ausgewichen werden, die allerdings entsprechend größer in ihrer Dimension werden. Die bisher eingesetzten Federn weisen darüber hinaus im Einzelnen folgende Nachteile auf:
Bei Tellerfedern sind sehr viele Einzelteile nötig um die nötige Kraft und auch den nötigen Federweg realisieren zu können (ganze Federpakete). Bei Druckfedern sind Federn mit großem Drahtdurchmesser und großen Ausgangslängen notwendig, um die entsprechende Kraft realisieren zu können. Die Druckfeder muss auf einen dementsprechend großen Hub komprimiert werden, um in die notwendige Arbeitslänge gebracht zu werden. Blattfedern werden bei großen Kräften auch als Federpaket eingesetzt und sind die teuersten der 3 genannten Federarten. Zudem sind Blattfedern zwar keine Federn mit einer großen Anfangshöhe sondern gehen im Gegensatz zu den anderen Federn stark in die Breite.

### 5) Montage mit Verwendung einer externen Pressvorrichtung.

Beim Stack-Zusammenbau wird häufig für das erste Verpressen eine externe Pressvorrichtung eingesetzt [7]. Sofern eine handelsübliche Presse verwendet wird muss hierbei immer darauf geachtet werden, dass der Stack im verpressten Zustand fixiert werden muss, wodurch meist eine Aufnahme des Stapels nötig wird, welche mit unter die Presse gestellt wird. Alternativ wird häufig eine eigene Pressvorrichtung konzipiert.

### 6) Die Sicherheit gegen einen Kurzschluss.

Eine wesentliche Voraussetzung für das gute Funktionieren eines Brennstoffzellenstapels ist die Gewährleistung, dass keinerlei Kurzschlüsse auftreten [6]. Die Sicherheit gegen einen versehentlichen Kurzschluss von außen, beispielsweise durch Berührung mit einem Werkzeug oder durch eine Hand, wird meist durch ein zusätzliches Gehäuse um den eigentlichen Brennstoffzellenstapel gewährleistet. Dies bedeutet, dass im Anschluss an die Montage des Stapels eine zusätzliche Kapselung konzipiert, angebracht und befestigt werden muss.

### 7) Führung der Bauteile während der Montage des Stacks.

Damit sich während des eigentlichen Fügeprozesses die einzeln angeordneten Bauteile nicht gegeneinander verschieben, werden häufig Führungselemente von außen, vorteilhaft direkt an der externen Pressvorrichtung, angebracht. Diese werden nach dem Fügeprozess in der Regel wieder entfernt.

Zurzeit werden von außen oder innen extra angefertigte Führungselemente angebracht, welche nach dem Stapeln der Bauteile nachteilig wieder entfernt werden müssen, da diese entweder die Funktionsweise des Brennstoffzellenstapels stören oder nicht die für weitere Prozessschritte benötigte Temperaturbeständigkeit aufweisen.

So ist aus DE 10 2008 040869 A1 eine Vorrichtung zum Verspannen eines Brennstoffzellenstapels und ein entsprechendes Verfahren zum Verspannen eines Brennstoffzellenstapels bekannt, wobei die Vorrichtung zwei Endplatten für den Brennstoffzellenstapel sowie ein Außengehäuse zur Aufnahme des Brennstoffzellenstapels aufweist. Sowohl die Endplatten als auch die Aufnahmevorrichtung weisen schräge Flächen auf, derart, dass beim Einlassen des Brennstoffzellenstapels mit den Endplatten in die Aufnahmevorrichtung die Last des Brennstoffzellenstapels vorteilhaft gegen das Innere des Brennstoffzellenstapels einwirkt und verspannt.

Ferner ist in DE 10 2007 061 650 A1 bereits eine tubulare Brennstoffzelle beschrieben, die an beiden Enden durch eine Abschlussplatte begrenzt ist, und bei der Zuführrohre und Kanäle in diese Abschlussplatte enden. Die Brennstoffzelle weist konzentrische, poröse Zylinder zur Durchleitung der Betriebsmittel auf, die an eine Membran-Keramik angrenzen. Die Abschlussplatte ist zur Abdichtung über einen mittleren Zuganker mit der Membran-Keramik und den Leitungen verpresst.

### Aufgabe und Lösung

Aufgabe der Erfindung ist es, ein einfaches und sicheres Verfahren zum Verspannen einzelner Brennstoffzellen gegeneinander zu einem Brennstoffzellenstapel bereit zu stellen, welches einfach zu handhaben ist und gleichzeitig den Schutz gegen Kurzschluss und den Ausgleich von Längenveränderungen der einzelnen Bauteile erfüllt.

Die Aufgaben der Erfindung werden gelöst, durch eine Vorrichtung zum Verspannen eines Brennstoffzellenstapels gemäß Hauptanspruch sowie durch ein Verfahren zum Verspannen eines Brennstoffzellenstapels gemäß Nebenanspruch. Vorteilhafte Ausgestaltungen des erfindungsgemäßen Verfahrens und der Vorrichtung finden sich in den jeweils darauf rückbezogenen Ansprüchen.

### Gegenstand der Erfindung

Die erfindungsgemäße Vorrichtung zum Verspannen eines Brennstoffzellenstapels umfasst ein Außengehäuse A, welches zur Aufnahme des Brennstoffzellenstapels geeignet ist, sowie zwei Endplatten E, die den Brennstoffzellenstapel an zwei Seiten begrenzen, und die jeweils wenigstens einen Durchlass zur Durchführung von Betriebsmittelzu- oder -abführungsleitungen, im Folgenden nur noch Betriebsmitteleitungen genannt, aufweisen.

Ferner umfasst die Vorrichtung zum Verspannen eines Brennstoffzellenstapels zwei ringförmige Spannmittel R, die mit dem Außengehäuse verbindbar sind, und die über eine Kontaktfläche K über die Endplatten eine Spannkraft auf den Brennstoffzellenstapel auszuüben vermögen.

Dazu weist wenigstens eines der ringförmigen Spannmittel ein Gewinde auf, welches mit einem entsprechenden Gewinde in dem Außengehäuses korreliert, und darüber verbindbar ist.

In einer vorteilhaften Ausgestaltung ist eines der ringförmigen Spannmittel entweder bereits fest mit dem Außengehäuse verbunden, oder aber in einer vorteilhaften Ausführung ebenfalls als zweiter Ring mit einem Gewinde zum Anschluss an das Außengehäuse ausgestaltet.

Das Außengehäuse weist in einer bevorzugten Ausgestaltung die Form eines Hohlzylinders (Außenmantel) auf, kann aber beispielsweise auch in Form eines Polygonalen Hohlrohres vorliegen.

Im Fall des zylinderförmigen Außenmantels kann ein oder beide ringförmigen Spannmittel vorteilhaft einfach über ein entsprechendes Außen- oder Innengewinde mit dem zylinderförmigen Außenmantel verbunden werden. Beispielsweise weist das Außengehäuse an wenigstens einem Enden ein Innengewinde und das ringförmigen Spannmittel ein entsprechendes Außengewinde auf. Alternativ kann aber auch das Außengehäuse ein Außengewinde aufweisen und das ringförmige Spannmittel ein Innengewinde.

Die ringförmigen Spannmittel sind derart ausgestaltet, dass sie auf die Endplatten eines im Außenmantel angeordneten Brennstoffzellenstapels über wenigstens ein Gewinde eine Kraft auszuüben vermögen, die ein Verspannen des Brennstoffzellenstapels nach sich zieht. Dazu weisen die ringförmigen Spannmittel einen Bereich (Kontaktfläche) auf, der beim Einschrauben des Spannmittels in das Außengehäuse hineinreicht und beim Verspannen die Endplatte des Brennstoffzellenstapels kontaktieren würde. Über diese Kontaktfläche wird regelmäßig der (Verspannungs-)Druck auf den Brennstoffzellenstapel ausgeübt.
Dieser Bereich (Kontaktfläche) kann vorteilhaft als Ring ausgestaltet sein, um einen zentralen Bereich freizuhalten. Dieser freie Bereich korreliert in der Regel mit dem Durchlass in der Endplatte zur Durchführung von Betriebsmitteleitungen, so dass diese durch die Endplatte und das ringförmige Spannmittel hindurch geführt werden können.

Ferner ermöglicht die ringförmige Kontaktfläche eine möglichst gleichförmige Kraftübertragung über den gesamten Umfang des ringförmigen Spannmittels auf die Endplatte des Brennstoffzellenstapels und damit auf den Brennstoffzellenstapeln.

Eine besonders vorteilhafte Ausgestaltung sieht vor, dass wenigstens ein ringförmiges Spannmittel ein Außengewinde (Ringschraube) und das Außengehäuse ein entsprechendes Innengewinde aufweist. Bei dieser Ausgestaltung bildet der Ring selbst vorteilhaft bereits den Bereich, der für den Kontakt mit der Endplatte des Brennstoffzellenstapels vorgesehen ist.

Eine weitere Ausgestaltung der Erfindung sieht vor, dass wenigstens ein ringförmiges Spannmittel mit einem Innengewinde (Ringmutter) und das Außengehäuse ein entsprechendes Außengewinde aufweist. Bei dieser Ausgestaltung könnte ein parallel zum Gewinde des ringförmigen Spannmittels verlaufender Innenring den Bereich, der für den Kontakt mit dem Brennstoffzellenstapel vorgesehen ist, ausbilden.
Als Material für das Außengehäuse und die Endplatten sind insbesondere Materialien geeignet, die gut bearbeitbar sind, so dass ohne weiteres die entsprechenden Gewinde vorgesehen werden können. Ein elektrischer Kurzschluss zwischen Brennstoffzellenstapel und dem Außengehäuse sollte in jedem Fall verhindert werden.

Dazu kann das Außengehäuse vorteilhaft aus einem nicht leitfähigen Material, wie beispielsweise Kunststoff oder einem Verbundwerkstoff bestehen.

Es können jedoch auch leitfähige Materialien, wie beispielsweise Kunststoff, Aluminium, Stahl oder Verbundwerkstoffe eingesetzt werden. Dann sollte allerdings sichergestellt werden, dass bauartbedingt kein Kontakt mit dem Brennstoffzellenstapel erfolgen kann, indem beispielsweise zwischen Brennstoffzellenstapel und Außengehäuse ein ausreichend großer Luftspalt vorgesehen ist. Alternativ kann auch ein leitfähiges Material, wie Aluminium oder Stahl eingesetzt werden, welches zuvor mit einem nicht leitfähigen Überzug oder einer Beschichtung (z. B. Eloxieren, Lackieren, direkt aufgebrachter Kunststoffüberzug oder nachträglich aufgeschrumpfter Kunststoff) versehen wurde, um so einen Kontakt zum Brennstoffzellenstapel auszuschließen.

Neben der Leitfähigkeit bzw. der Nichtleitfähigkeit muss auch die Einsatztemperatur des Brennstoffzellenstapels bei der Wahl des Materials für das Außengehäuse und die Endplatten berücksichtigt werden. Vorgesehen ist der Einsatz der erfindungsgemäßen Verspannung für Nieder- und Hochtemperatur-Polymerbrennstoffzellen. Diese weisen einen Einsatzbereich von ca. 60 bis 200 °C auf. Da die erfindungsgemäße Verspannung nicht wieder entfernt wird, und somit auch während des Betriebs vorhanden ist, sollten die eingesetzten Materialien bei den vorgenannten Temperaturen beständig sein.

Da durch die erfindungsgemäße Verspannung auch während des Betriebs des Brennstoffzellenstapels prinzipiell keinerlei Variation in der Längenausdehnung mehr möglich ist, ist vorgesehen, dass bei der Erfindung die durch die unterschiedlichen Temperaturen auftretenden Längenausdehnungen des Brennstoffzellenstapels durch das Material des Außengehäuses selbst aufgefangen werden, und zwar dadurch, dass das Material selbst vorteilhaft einen ähnlichen thermischen Ausdehnungskoeffizienten aufweist, wie der gesamte Brennstoffzellenstapel.
Es hat sich zudem als vorteilhaft herausgestellt, ein nicht ganz massiv ausgeführtes Außengehäuse zu verwenden. Bei wechselnden Temperaturen haben sich Vorteile bezüglich des Wärmehaushaltes und der Zug- und Druckbeanspruchung gezeigt, wenn das Außengehäuse gewisse Durchbrüche aufweist, ohne dass dadurch jedoch die Stabilität insgesamt gefährdet wird. Eine vorteilhafte Ausführungsform sieht beispielsweise ein längs geschlitztes Außengehäuse mit abgerundeten Öffnungen vor.

Die Idee der Erfindung basiert auf der Vorstellung, dass die Verspannung des Brennstoffzellenstapels über eine äußere Verschraubung bewerkstelligt wird, welche in ihrer Längsausdehnung mit Hilfe wenigstens eines Gewindes definiert regulierbar eingestellt werden kann.

Das äußere Gehäuse kann vorteilhaft zylindrisch, d. h. als Hohlzylinder ausgestaltet sein, für den Fall, dass die Aufnahme eines ebenfalls zylindrisch angeordneten Brennstoffzellenstapels vorgesehen ist. Alternative Geometrien, wie etwa ein würfelförmiger oder quaderförmiger Brennstoffzellenstapel, könnten in einem insofern ebenfalls würfelförmigen oder quaderförmigen Außengehäuse untergebracht werden. Es ist aber auch der Einsatz eines quaderförmigen Brennstoffzellenstapels in einem hohlzylindrischen Außengehäuse möglich, oder ein zylindrischer Brennstoffzellenstapel in einem quaderförmigen Außengehäuse.

In dem Fall eines würfel- oder quaderförmigen Außengehäuses sollte dieses an wenigstens einer Stirnfläche einen runden, d. h. zylinderförmigen Bereich (Öffnung) aufweisen, bei dem ein Gewinde vorhanden ist.

Optional können ein oder mehrere Führungselemente vorgesehen werden, welche mit einem oder beiden Endplatten verbunden sind, und über die der Brennstoffzellenstapel exakt ausgerichtet werden kann. Ein geeignetes Führungselement können beispielsweise eine oder mehrere Führungsstangen sein. Die einzelnen Brennstoffzellenebenen könnten in diesem Fall dementsprechende Aussparungen z. B. innerhalb der Ebene als Durchbrüche, oder an der Außenkante als Einkerbungen, aufweisen. Vorteilhaft können bei diesem Spannkonzept diese Führungselemente nach dem Zusammenbau in, bzw. am Brennstoffzellenstapel verbleiben, ohne dass die sich anschließende eigentliche Verspannung beeinträchtigt wird.

Ein weiteres optionales Positionsmittel verhindert vorteilhaft, dass der zusammengebaute und in dem Außengehäuse positionierte Brennstoffzellenstapel während der Kraftausübung (Eindrehen des ringförmigen Spannmittels in das Gewinde des Außengehäuses) des Verspannens verdreht oder verschoben wird. Dies ist insbesondere vorteilhaft, wenn andernfalls die durch die Endplatten geführten Betriebsmittelzu- und -abführungsleitungen in Mitleidenschat gezogen würden.

### Spezieller Beschreibunqsteil

Nachfolgend wird die Erfindung anhand eines vorteilhaften Ausführungsbeispiels und einiger Figuren näher erläutert, ohne dass sich daraus Beschränkungen für die Erfindung ergeben.

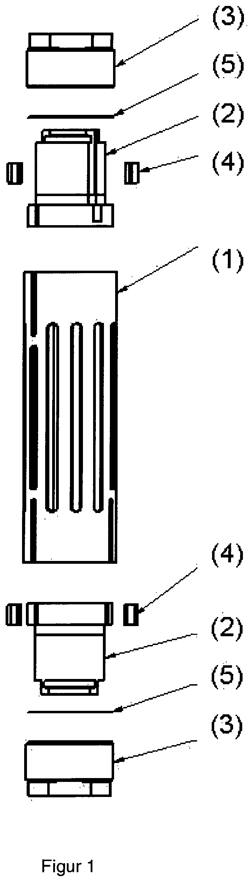

Das Spannkonzept gemäß Figur 1 (Seitenansicht) besteht hauptsächlich aus einem zylindrischen Außenmantel (Außengehäuse) 1, zwei Endplatten 2, zwei ringförmigen Spannmitteln (Ringschraube, bzw. Ringmutter) 3 zum Verspannen. Zusätzlich sind in dieser Ausgestaltung noch optionale Nutensteine 4 und Rutschelemente 5 vorhanden.

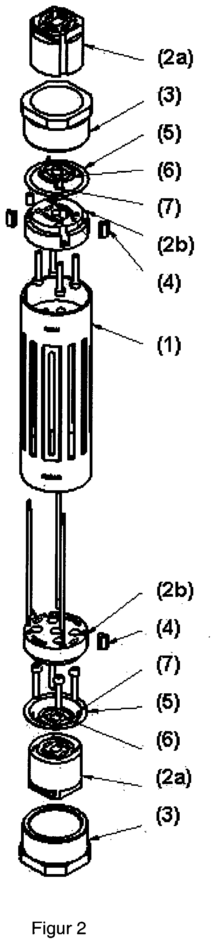

In der Explosionszeichnung der Figur 2, die eine weitere Ausführungsform der erfindungsgemäßen Spannvorrichtung darstellt, sind zudem noch weitere optionale Dichtungen 6 und Führungsstifte 7, evtl. mit Muttern, eingezeichnet. In der hier dargestellten Ausführungsform ist aus fertigungstechnischen Gründen jeweils eine zweigeteilte Endplatte 2a, 2b vorgesehen, weswegen oben genannte Dichtungen notwendig sind. Diese zweigeteilte Endplatte kann auch einteilig ausgeführt werden, z. B. durch Laser- Rapid- Prototyping, was derzeit jedoch sehr aufwändig ist. In diesem Fall könnten die Führungsstifte und die Dichtungen entfallen.

Der Außenmantel 1 zeigt in einer speziellen Ausführungsform über den Umfang verteilte Schlitze, welche vorteilhaft folgende Funktionen übernehmen können:
- Diese Schlitze bewirken in diesem Bereich eine Verringerung des Materials, wodurch nur noch eine reduzierte Fläche bzw. ein reduzierter Restquerschnitt vorhanden ist, welche die Längenausdehnungen aufnehmen muss. Diese am Umfang reduzierte tragende Fläche ist über die gesamte Länge der Schlitze konstant. Dabei ist der Außenmantel in diesem Bereich so ausgelegt, dass er beim Verspannen elastisch vorgedehnt wird und somit einen konstanten Anpressdruck auf die Stack- Komponenten überträgt. Zusätzlich nimmt dieser Bereich auch die zeitlich wechselnden Kraft- und Längenausdehnungen, welche durch variierende Betriebstemperaturen entstehen, durch das elastische Verhalten (ähnlich einer Dehnschraube) auf. Durch dieses Verhalten des Außenmantels werden weitere Federelemente, wie Zug- oder Druckfedern, ersetzt.
- Der Restquerschnitt im Bereich der Schlitze gleicht die Längenausdehnung durch das Montieren sowie durch die Wärme aus, indem diese eine ähnlich Wirkungsweise wie Dehnschrauben aufweisen (Lösung zu 3) und 4)).
- Diese Schlitze sind in ihrer Breite derart gewählt, dass diese die Sicherheitsmaßnahmen zur Verhinderung eines elektrischen Schlages erfüllen (Lösung zu 6)).
- Durch diese Schlitze kann eine passive Kühlung des Brennstoffzellenstapels realisiert werden, in dem dieser beispielsweise in einem Ölbad betrieben wird,
- Es wird eine gewisse Gewichtsersparnis erreicht.

Über die Endplatten 2 kann der Brennstoffzellenstapel vorteilhaft bereits vormontiert werden und in diesem vormontierten Zustand in den Außenmantel 1 eingeführt werden, wo der Stapel in seinen endgültigen Zustand verpresst wird. Beim Zusammenbau kann vorgesehen sein, dass eines der ringförmigen Spannmittel 3 schon in den Außenmantel 1 als Anschlag in die entsprechende Position eingeschraubt wird, und nach dem Einsetzen des vormontierten Brennstoffzellenstapels die eigentliche Verspannung durch das Einschrauben des zweiten ringförmigen Spannmittels erfolgt.

Zusätzlich sind die Endplatten so konzipiert das mehrere Spannkonzepte modular aufgebaut werden können und dann auch miteinander verbunden werden können. Die zwei ringförmigen Spannmittel 3 dienen zum endgültigen Verspannen des vormontierten Brennstoffzellenstapels. Dies geschieht, indem ein ringförmiges Spannmittel in das Außengehäuse montiert wird und das zweite ringförmige Spannmittel auf den eingeführten Stapel aufgeschraubt wird. Dabei wird die Druckkraft nicht punktuell aufgetragen, wie beispielsweise bei Zugankern, sondern über die ganze Fläche (Kontaktfläche), wodurch eine gleichmäßige Kraftverteilung bei den Dichtungen sowie der Membran-Elektrodeneinheit entsteht. Dadurch, dass der Stack mit den Führungselementen vormontiert werden kann und dann direkt im Außengehäuse fertig für die Anwendung verspannt wird, ist vorteilhaft keine externe Presse notwendig (Lösung zu 1), 2) und 5)). Zudem kann die Spannvorrichtung während des Betriebs vorteilhaft um den Brennstoffzellenstapel verbleiben.

Bei dem vorliegenden Ausführungsbeispiel werden Führungselemente 7 (z. B. schmale Gewindestangen) vorab in eine der beiden Endplatten 2 eingeschraubt und dienen dann als Führungshilfe für die zu stapelnden Brennstoffzellen. Diese Führungselemente 7 können über ein Gewinde als vorläufiges fixierendes Element genutzt werden, indem kleine Muttern aufgeschraubt werden, die den gestapelten Stack bis zur endgültigen Montage fixieren. Diese Führungselemente 7 brauchen vorteilhaft nicht wieder entfernt werden. Sie haben keinen negativen Einfluss auf die Funktion des Brennstoffzellenstapels (Lösung zu 7)).

Die Nutensteine 4 können in Kombination mit dem Außengehäuse 1 ein Verdrehen der im Außengehäuse angeordneten Bauteile in einer speziellen Ausgestaltung der Erfindung verhindern.

Die optionalen Rutschelemente 5 unterstützen den Prozess des endgültigen Verpressens des Brennstoffzellenstapels, indem diese den Slip-Stick-Effekt abbauen.

Als zu berücksichtigende Rahmenbedingungen für das erfindungsgemäße Spannkonzept sind insbesondere die Betriebstemperatur und die Abmaße anzusehen.

Die Funktion des multifunktionalen Spannkonzeptes wird lediglich von dem verwendeten Material begrenzt, welches die niedrigste Temperaturbeständigkeit aufweist. Beim Ausführungsbeispiel wurde zum Beispiel FKM als Dichtmaterial zwischen der zweigeteilten Endplatte eingesetzt, welches eine ausreichende Langzeitbeständigkeit bei maximal ca. 200 °C aufweist.

Das Spannkonzept kann aus folgenden Gründen auch nicht unendlich groß ausgeführt werden:
- Die mechanisch aufgebrachte Spannkraft wird lediglich über ein Gewinde übertragen, weswegen der tragende Querschnitt eines Gewindes eine regelmäßige Belastungsobergrenze aufweist.
- Alle Längenausdehnungen werden vom Außenmantel abgefangen, wodurch auch hier eine Belastungsgrenze zu beachten ist. Je länger die Spannvorrichtung ausgeführt wird, desto mehr Bauteile beinhaltet diese auch, welche jeweils wiederum Längenänderungen aufweisen können, die dann auch erhöhte Zugspannungen erzeugen.
- Je größer die Vorrichtung wird (Durchmesser, Kantenlänge) desto mehr verformt sich diese unter Belastung auch. Daher existiert auch deswegen eine Obergrenze bezüglich der Abmaße, damit auch jederzeit die nötigen Anpressdrücke für die Dichtungen und die Membran-Elektrodeneinheit gewährleistet ist.

Als zylindrische Ausführung ist dieses Spannkonzept beispielsweise für einen Brennstoffzellenstapel geeignet, der in einem Bohrloch betrieben werden soll, in dem das Spülmittel gleichzeitig als Kühlmittel für den Brennstoffzellenstapel dienen könnte.

### In der Anmeldung zitierter Stand der Technik

[1] P. Lin, P. Zhou, C.W. Wu, "A high efficient assembly technique for large proton exchange membrane fuel cell stacks: Part II. Applications", Journal of Power Sources, Volume 195, Issue 5, 1 March 2010, Pages 1383-1392.
[2] DE 10 2010 007 979 A1
[3] AU 2008 209059 B2
[4] DE 10 2008 040 869 A1
[5] DE 103 43 766 A1
[6] DE 10 2004 018 619 A1
[7] DE 10 2010 018 417 A1
[8] US 6,372,372 B1
[9] US 4,478,917
[10] US 3,134,697

## Patentansprüche

1. Vorrichtung zum Verspannen eines Brennstoffzellenstapels,
umfassend wenigstens zwei Brennstoffzellen,
wobei der Brennstoffzellenstapel ein Außengehäuse 1 zur Aufnahme des Brennstoffzellenstapels sowie zwei Endplatten 2 aufweist, die jeweils wenigstens einen Durchlass zur Durchführung von Betriebsmittelleitungen des Brennstoffzellenstapels aufweisen,
***dadurch gekennzeichnet, dass***
die Vorrichtung zwei ringförmige Spannmittel 3 aufweist,
wobei wenigstens ein ringförmiges Spannmittel 3 mit dem Außengehäuse 1 über ein Gewinde verbindbar ausgestaltet ist.

2. Vorrichtung nach Anspruch 1 mit einem zylindrischen Außengehäuse 1.

3. Vorrichtung nach einem der Ansprüche 1 bis 2 mit einem Außengehäuse 1 aus einem elektrisch nicht leitenden Material.

4. Vorrichtung nach einem der Ansprüche 1 bis 2 mit einem Außengehäuse 1 aus einem elektrisch leitenden Material, welches einen elektrisch nicht leitenden Überzug auf wenigstens einem Teil der Oberfläche aufweist.

5. Vorrichtung nach einem der Ansprüche 1 bis 4 mit Schlitzen in dem Außengehäuse 1.

6. Vorrichtung nach einem der Ansprüche 1 bis 5, bei dem das Außengehäuse 1 an wenigstens einem Ende ein Innengewinde und wenigstens ein ringförmiges Spannmittel 3 ein entsprechendes Außengewinde aufweist.

7. Vorrichtung nach einem der Ansprüche 1 bis 5, bei dem das Außengehäuse 1 an wenigstens einem Ende ein Außengewinde und wenigstens ein ringförmiges Spannmittel 3 ein entsprechendes Innengewinde aufweist.

8. Vorrichtung nach einem der Ansprüche 1 bis 7, bei dem wenigstens eine Endplatte 2 zweiteilig ausgestaltet ist.

9. Verfahren zum Verspannen eines Brennstoffzellenstapels mit Hilfe einer Vorrichtung nach einem der Ansprüche 1 bis 8 mit den Schritten
- der Brennstoffzellenstapel wird mit zwei Endplatten 2 vormontiert,
- der so vormontierte Brennstoffzellenstapel wird in das Außengehäuse 1 eingeführt,
- durch Einschrauben wenigstens eines ringförmigen Spannmittels 3 in das Außengehäuse 1 wird ein Spanndruck auf den Brennstoffzellenstapel ausgeübt und dieser verspannt.

10. Verfahren nach Anspruch 9, bei dem vor dem Einführen des so vormontierten Brennstoffzellenstapels in das Außengehäuse 1 bereits ein ringförmiges Spannmittel 3 in das Außengehäuse 1 als Anschlag eingeschraubt wurde.

11. Verfahren nach einem der Ansprüche 9 bis 10, bei dem zur Vormontage des Brennstoffzellenstapels mit zwei Endplatten 2, Führungsstifte eingesetzt werden.

12. Verfahren nach einem der Ansprüche 9 bis 11, bei dem Nutensteine 4 eingesetzt werden, die beim Einschrauben wenigstens eines ringförmigen Spannmittels 3 in das Außengehäuse 1 ein Verdrehen des Brennstoffzellenstapels verhindern.

## Claims

1. Device for bracing a fuel cell stack,
comprising at least two fuel cells,
in which the fuel cell stack has an outer housing 1 for accommodating the fuel cell stack as well as two end plates 2, which each have at least one passage for conducting the utility piping of the fuel cell stack,
***characterised in that***
the device has two ring-shaped clamping devices 3,
in which at least one ring-shaped clamping device 3 is made so that it may connect with the outer housing 1 through a thread.

2. Device according to claim 1 with a cylindrical outer housing 1.

3. Device according to one of claims 1 to 2 with an outer housing 1 made of a non-electrically conducting material.

4. Device according to one of claims 1 to 2 with an outer housing 1 made of an electrically conducting material, which has a non-electrically conducting covering on at least a part of the surface.

5. Device according to one of claims 1 to 4 with slots in the outer housing 1.

6. Device according to one of claims 1 to 5, in which the outer housing 1 has an inner thread on at least one end and at least one ring-shaped clamping device 3 has a corresponding outer thread.

7. Device according to one of claims 1 to 5, in which the outer housing 1 has an outer thread on at least one end and at least one ring-shaped clamping device 3 has a corresponding inner thread.

8. Device according to one of claims 1 to 7, in which at least one end plate is made in 2 parts.

9. Method for bracing a fuel cell stack using a device according to one of claims 1 to 8 with the steps
- the fuel cell stack is preassembled with two end plates 2,
- the fuel cell stack preassembled in this way is introduced into the outer housing 1,
- a clamping pressure is exerted on the fuel cell stack by screwing at least one of the ring-shaped clamping devices 3 into the outer housing 1 and clamps it.

10. Method according to claim 9, in which a ring-shaped clamping device 3 has already been screwed into the outer housing 1 as a stop before introducing the fuel cell stack preassembled in this way.

11. Method according to one of claims 9 to 10, in which guide pins are inserted for preassembling the fuel cell stack with two end plates 2.

12. Method according to one of claims 9 to 11, in which slot nuts 4 are inserted, which prevent the fuel cell stack from twisting when screwing at least one ring-shaped clamping device 3 into the outer housing 1.

## Revendications

1. Dispositif servant à serrer un empilement de piles à combustible,
comprenant au moins deux piles à combustible,
dans lequel l'empilement de piles à combustible présente un boîtier extérieur (1) servant à loger l'empilement de piles à combustible ainsi que deux plaques d'extrémité (2), qui présentent respectivement au moins un passage servant à faire passer des conduites de carburant de l'empilement de piles à combustible,
**caractérisé en ce que**
le dispositif présente deux moyens de serrage (3) de forme annulaire,
dans lequel au moins un moyen de serrage (3) de forme annulaire est configuré de manière à pouvoir être relié par l'intermédiaire d'un filetage au boîtier extérieur (1).

2. Dispositif selon la revendication 1, comprenant un boîtier extérieur (1) cylindrique.

3. Dispositif selon l'une quelconque des revendications 1 à 2, comprenant un boîtier extérieur (1) composé d'un matériau non conducteur électriquement.

4. Dispositif selon l'une quelconque des revendications 1 à 2 comprenant un boîtier extérieur (1) composé d'un matériau électroconducteur, qui présente un revêtement non conducteur électriquement sur au moins une partie de la surface.

5. Dispositif selon l'une quelconque des revendications 1 à 4 comprenant des entailles dans le boîtier extérieur (1).

6. Dispositif selon l'une quelconque des revendications 1 à 5, dans lequel le boîtier extérieur (1) présente au niveau d'au moins une extrémité un filetage intérieur, et au moins un moyen de serrage (3) de forme annulaire présente un filetage extérieur correspondant.

7. Dispositif selon l'une quelconque des revendications 1 à 5, dans lequel le boîtier extérieur (1) présente au niveau d'au moins une extrémité un filetage extérieur, et au moins un moyen de serrage (3) de forme annulaire présente un filetage intérieur correspondant.

8. Dispositif selon l'une quelconque des revendications 1 à 7, dans lequel au moins une plaque d'extrémité (2) est configurée en deux parties.

9. Procédé servant à serrer un empilement de piles à combustible à l'aide d'un dispositif selon l'une quelconque des revendications 1 à 8, comprenant les étapes de
- l'empilement de piles à combustible est prémonté avec deux plaques d'extrémité (2),
- l'empilement de piles à combustible ainsi prémonté est introduit dans le boîtier extérieur (1),
- une pression de serrage est exercée sur l'empilement de piles à combustible par le vissage d'au moins un moyen de serrage (3) de forme annulaire dans le boîtier extérieur (1) et serre ce dernier.

10. Procédé selon la revendication 9, dans lequel un moyen de serrage (3) de forme annulaire a déjà été vissé en tant que butée dans le boîtier extérieur (1) avant l'introduction de l'empilement de piles à combustible prémonté dans le boîtier extérieur (1).

11. Procédé selon l'une quelconque des revendications 9 à 10, dans lequel des tiges de guidage sont utilisées aux fins du prémontage de l'empilement de piles à combustible avec deux plaques d'extrémité (2) .

12. Procédé selon l'une quelconque des revendications 9 à 11, dans lequel sont utilisés des coulisseaux (4), qui empêchent une rotation de l'empilement de piles à combustible lors du vissage d'au moins un moyen de serrage (3) de forme annulaire dans le boîtier extérieur (1).
